Europäisches Patentamt

European Patent Office

Office européen des brevets

(19)

(11) Veröffentlichungsnummer: **0 311 852**
**A2**

(12) **EUROPÄISCHE PATENTANMELDUNG**

(21) Anmeldenummer: 88116168.1

(22) Anmeldetag: 30.09.88

(51) Int. Cl.⁴: **C08G 18/10 , C08G 18/22 , C08G 18/48 , C08G 18/76 , C09J 3/14**

(30) Priorität: **10.10.87 DE 3734340**

(43) Veröffentlichungstag der Anmeldung:
**19.04.89 Patentblatt 89/16**

(84) Benannte Vertragsstaaten:
**BE DE ES FR GB IT SE**

(71) Anmelder: **BAYER AG**
**Konzernverwaltung RP Patentabteilung**
**D-5090 Leverkusen 1 Bayerwerk(DE)**

(72) Erfinder: **Meckel, Walter, Dr.**
**Zonserstrasse 9**
**D-4040 Neuss(DE)**
Erfinder: **Hombach, Rudolf, Dr.**
**Johann-Jansen-Strasse 24**
**D-5090 Leverkusen(DE)**

(54) **Hitzehärtbares Klebstoffsystem und ein Verfahren zum Verkleben von Werkstoffen.**

(57) Das hitzehärtbare Klebstoffsystem ist aufgebaut auf Basis von Isocyanatgruppen enthaltenden Prepolymeren P, einer oberhalb von 110° schmelzenden Polyhydroxylverbindung C und Carbonsäuresalzen D von Wismuth, Cadmium, Blei oder Zink.

EP 0 311 852 A2

## Hitzehärtbares Klebstoffsystem und ein Verfahren zum Verkleben von Werkstoffen

Die Erfindung betrifft ein hitzehärtbares Klebstoffsystem, insbesondere ein Eintopfsystem und Verfahren zum Verkleben von Werkstoffen.

Die Verwendung von Reaktionsklebstoffen auf Basis von Polyhydroxylverbindungen und Polyisocyanaten ist bekannt aus GB-PS 1 408 510 und DE-A-2 719 720, jedoch erfordern diese Systeme immer ein aufwendiges Mischen und vor allem eine genaue Einhaltung der optimalen Mengenverhältnisse von Hydroxyl- und Isocyanatgruppen, das unter Praxisbedingungen nicht immer exakt einzuhalten ist. Aus diesem Grund verlangt die Praxis immer häufiger Einkomponentensysteme, die ohne aufwendiges Mischen und Dosieren nur noch aufgetragen werden müssen. Hier wurden vor allem feuchtigkeitshärtende Systeme entwickelt, die den Nachteil aufweisen, daß sie aber insbesondere in dicker Klebfuge wegen der langsamen Diffusion des Wassers nur sehr langsam aushärten.

Einkomponentensysteme, die auch in dicker Klebfuge sicher aushärten, sind die hitzehärtbaren Systeme. Ein Beispiel hierfür sind die aus der DE-A-34 03 499 bekannten in Polyhydroxyl- und/oder Polyaminverbindungen dispergierten Polyisocyanate, die durch bestimmte Operationen desaktiviert wurden.

Der Einsatz von hochschmelzenden Hydroxylverbindungen in Isocyanatgruppen enthaltenden Systemen wird in der US-A-29 08 657 beschrieben. Als Polyhydroxylverbindung diente Stärke. Die mögliche Verwendung von solchen Systemen als Klebstoffe wurde in der US-A-34 88 302 beschrieben. Insbesondere dient Pentaerythrit als Hydroxylkomponente und zwar in einer Menge von 2 bis 100 Hydroxylgruppen zu einer Isocyanatgruppe. Es werden insbesondere sehr flexible Systeme beschrieben, die jedoch nur langsam aushärten. Die EP-A-85 243 beschreibt ebenfalls Isocyanatgruppen enthaltende Systeme mit Pentaerythrit als Härter mit der Maßgabe, daß das Verhältnis von Hydroxyl- zu Isocxyanatgruppen kleiner zwei und bevorzugt um 1 beträgt. Diese Systeme haben den Nachteil, daß die Aushärtetemperatur zu hoch liegt. Versuche, solche Systeme mit den in der Isocyanatchemie üblichen Katalysatoren zu beschleunigen, führen zu einer Absenkung der Lagerstabilität, so daß die Anwendungsmöglichkeiten wiederum eingeschränkt sind.

Es wurde nun überraschend gefunden, daß lagerstabile Systeme mit Aushärtetemperaturen kleiner 120 °C erhalten werden, wenn als Katalysatoren oberhalb 100 °C schmelzende Metallsalze von Fettsäuren mit mehr als 11 Kohlenstoffatomen eingesetzt werden. Die katalytische Wirksamkeit von Zinkstearat auf die Reaktion von Hydroxyl- mit Isocyanatgruppen wird zwar in der US-A-4 119 594 beschrieben, jedoch handelt es sich hier um Elastomere nach dem RIM-System mit begrenzter Topfzeit.

Der positive Einfluß der Metallsalze auf die adhäsiven Eigenschaften auf die erfindungsgemäßen Systeme ist überraschend, da Salze wie Zinkstearat seit jeher als Trennmittel für Kunststoffteile zur besseren Entformbarkeit aus Metallformen und auch im RIM-Prozeß als Trennmittel (s. US-A-4 585 803) eingesetzt werden, und daher von diesen Zusätzen keine verbesserte Haftung von Klebstoffsystemen insbesondere an Metallen wie beispielsweise Stahl erwartet werden konnte.

Gegenstand der Erfindung ist ein hitzehärtbares Klebstoffsystem auf Basis von Isocyanatgruppen und Polyethersegmente enthaltenden Prepolymeren P und Polyhydroxylverbindungen C, dadurch gekennzeichnet, daß

1. das Prepolymere P auf Basis von einem oder mehreren Polyolen A mit Polyethersegmenten der mittleren Hydroxylzahl 50 bis 160 und einer mittleren Funktionalität von 2,05 bis 2,6 und wenigstens einem Diphenylmethandiisocyanat B aufgebaut ist, und

2. die Polyhydroxylverbindung C mindestens drei Hydroxylgruppen pro Molekül enthält, und in einer Menge von 1 bis 10 Hydroxylgruppen pro noch verfügbarer NCO-Gruppe im Prepolymer P dispergiert ist und oberhalb von 110 °C schmilzt, und

3. als Katalysator D wenigstens ein oberhalb von 100 °C schmelzendes Carbonsäuresalz mit mehr als 12, insbesondere 14 C-Atomen von Wismuth, Cadmium, Blei oder Zink in fester Form enthalten ist.

Als Polyole mit Polyethersegmenten A sind bevorzugt die einzusetzen, die sich von bi- und trifunktionellen Startern durch Addition von Propylen- und/oder Ethylenoxid ableiten. Als Starter für die Polyole sind vornehmlich die bifunktionellen Verbindungen wie beispielsweise Wasser, Propylenglykol, Butandiol-1,4, Butylamin, Hydrochinon, 4,4'-Dihydroxydiphenylmethan, 2,2-Bis-(4-hydroxy-phenyl)propan und Anilin oder trifunktionelle Starter wie Trimethylolpropan oder Glycerin zu nennen. Es können aber auch Polyetherester eingesetzt werden, die sich z.B. durch Verestern von Polyethern der obengenannten Art mit Dicarbonsäuren wie beispielsweise Adipinsäure oder Phthalsäure ableiten. Bei der Veresterung können auch Glykole wie beispielsweise Ethylenglykol, Butandiol-1,4 oder Hexandiol-1,6 mitverwendet werden.

Die mittlere Hydroxylzahl des Polyols A bzw. des Polyolgemisches A liegt zwischen 50 und 160, vorzugsweise zwischen 70 und 150 und besonders bevorzugt zwischen 90 und 140. Die mittlere Hydroxylzahl errechnet sich nach der Formel:

$$\text{mittlere Hydroxylzahl } \bar{H} = \frac{\sum g_i \times H_i}{\sum g_i}$$

wobei gi das Gewicht der Einzelkomponenten i mit der Hydroxylzahl $H_i$ bedeutet.

Die mittlere Funktionalität $\bar{F}$ errechnet sich nach der Formel

$$\bar{F} = \Sigma\, m_i * F_i$$

wobei $m_i$ der Molenbruch der Einzelkomponenten und F die Funktionalität der Einzelkomponenten bezogen auf die Isocyanatreaktivität bedeutet.

So kann das Polyol oder Polyolgemisch A aus mehreren Komponenten bestehen, vornehmlich aus bifunktionellen Verbindungen mit einem mittleren Molekulargewicht von 600 bis 3000, bevorzugt zwischen 800 und 2500 und/oder trifunktionellen Anteilen mit einem Molekulargewicht von 300 bis 6000, bevorzugt zwischen 400 und 4600.

Ein besonders bevorzugtes Diphenylmethandiisocyanat B ist 4,4'-Diphenylmethandiisocyanat, gegebenenfalls mit 0 bis 60 % des 2,4'-Diphenylmethandiisocyanat.

Das Polyol bzw. Polyolgemisch A wird mit einem Überschuß des Diphenylmethandiisocyanates B umgesetzt, so daß ein Prepolymer mit einem Gehalt an Isocyanatgruppen von vorzugsweise 6 bis 15 %, insbesondere 9 bis 13 Gew.-% entsteht.

Das durch Reaktion von (A) und (B) erhaltene Prepolymer P wird mit der Polyhydroxylverbindung C, welche vorzugsweise in einer Korngröße von <100 µm, bevorzugt <75 µm vorliegt, zusammengegeben, insbesondere in das Prepolymer eingerührt.

Beispiele für Verbindungen C sind Tris-(2-hydroxyethyl)isocyanurat, Pentaerythrit, Mannit und Sorbit. Unter diesen ist Pentaerythrit besonders bevorzugt. Es können aber auch Mischungen eingesetzt werden, um zu niedrigeren Schmelzpunkten zu gelangen. Das Verhältnis der Hydroxylgruppen in der hochschmelzenden Hydroxylverbindung C zu den freien Isocyanatgruppen in dem Prepolymeren liegt im allgemeinen zwischen 1:1 und 10:1, bevorzugt zwischen 1,5:1 und 5:1, und ganz besonders bevorzugt zwischen 2:1 und 4:1.

Der Katalysator D liegt vorzugsweise in einer Menge von 0,02 bis 0,5 Gew.-% bezogen auf das Gesamtsystem, insbesondere in einer Menge von 0,1 bis 0,3 Gew.-% vor. Die Komponente D liegt im allgemeinen in fester, fein verteilter Form vor; die Korngröße liegt vorzugsweise im Bereich von 5 bis 75 µm.

Die Herstellung der erfindungsgemäßen Klebstoffsysteme erfolgt vorzugsweise in üblichen Rühraggregaten durch Umsetzung der ethergruppenhaltigen Polyole A mit den Diisocyanaten B bei Temperaturen von 50 bis 80°C bis zu einem konstanten Isocyanatgehalt, anschließend werden die hochschmelzenden Hydroxylverbindungen C zugegeben, wobei die Temperatur nicht über 70°C ansteigen sollte.

Dann werden die Katalysatoren D zugegeben, wobei auch hier die Temperatur nicht oberhalb von 70°C liegen sollte.

Man kann aber auch so verfahren, daß die hochschmelzende Hydroxylverbindung C mit dem gesamten oder auch einem Teil der Polyole A in einer geeigneten Mühle, z.B. eine Korrundscheibenmühle auf eine Korngröße von <100 µm mahlt, wobei hier die Temperatur nicht oberhalb von 60°C liegen sollte, und dieses Gemisch anschließend der Umsetzung mit den Diisocyanaten B unterzieht bis ein konstanter NCO-Wert erhalten wird. Der Katalysator D wird dann zugegeben.

Gegebenenfalls können zusätzlich zu den Diphenylmethandiisocyanaten B in einer Menge bis zu 10 Gew.-% andere Isocyanate zugegeben werden, wie beispielsweise 2,4-bzw. 2,6-Toluylendiisocyanat oder eines Gemisches dieser Isomeren, 4,4'-Dicyclohexylmethandiisocyanat, Isophorondiisocyanat oder Hexamethylendiisocyanat.

Den Systemen können weiterhin, insbesondere, wenn spezielle rheologische Eigenschaften gewünscht sind, Additive, wie beispielsweise inerte anorganische Füllstoffe wie Schwerspat, Aluminiumoxid oder pyrogene Kieselsäuren hier insbesondere hydrophob eingestellte typen wie sie von der Firma Degussa unter dem Namen Aerosil R202 angeboten werden, zugesetzt werden. Diese Operation erfolgt bevorzugt in geeigneten Knetaggregaten.

Ebenso ist der Zusatz von Weichmachern und/oder hochsiedenden Kohlenwasserstoffen nicht ausgeschlossen.

Die Abfüllung der Systeme erfolgt bevorzugt in Fässer oder Kartuschen, aus denen der Klebstoff über Faßpumpen oder Druck direkt auf das zu klebende Substrat aufgetragen wird und anschließend durch eine Hitzebehandlung in einem Ofen, durch beheizte Klemmbacken oder Mikrowellenheizung ausgehärtet wird.

Es ist unter Umständen auch ausreichend, den Klebstoff nur anzugelieren, so daß eine ausreichende Handfestigkeit erreicht wird, jedoch sollte die Temperatur einmal auf 100 bis 120 °C in der Klebfuge gestiegen sein.

Die erfindungsgemäßen Klebstoffe sind zum Verkleben der verschiedensten Substrate geeignet, wie beispielsweise SMC gegen SMC, Stahl und Aluminium oder thermoplastische Kunststoffe wie ABS, Polycarbonat, etc. gegen sich selbst und Metalle wie Stahl oder Aluminium, und selbstverständlich auch Metalle, wie Stahl oder Aluminium gegeneinander.

Beispiele

Herstellung der Systeme.

Die Polyole werden für eine Stunde bei 100 °C im Vakuum (<20 Torr) entwässert. Nach Zugabe von 4,4′-Diphenylmethandiisocyanat mit 2 % 2,4′-Diphenylmethandiisocyanat wird das Isocyanatgruppen enthaltende Prepolymer bei 60 bis 80 °C bis zu einem konstanten NCO-Wert gerührt.

Die trockenen, hochschmelzenden Polyhydroxylverbindungen werden unter Vakuum eingerührt. Anschließend werden bei Temperaturen unterhalb von 60 °C der Metallsalzkatalysator und eventuelle andere Additive eingerührt.

Die Prüfung der Lagerstabilität der Systeme erfolgt durch dreitägiges Lagern bei 50 °C.

Stahlprüfkörper mit den Abmessungen 20 x 40 mm werden mit Methylenchlorid gewaschen und nach dem Ablüften 10 mm überlappend mit den Klebstoffen für 15 Minuten auf 110 bzw. 140 °C aufgeheizt. Anschließend werden die Prüfkörper bei Raumtemperatur gelagert und nach 1 bzw. 24 Stunden einem Zugscherversuch nach DIN 53 283 mit einer Vorschubgeschwindigkeit von 10 mm/min. unterworfen.

Die Versuche 1a, 2a und 3a konnten bei einer Ausheiztemperatur von 110 °C nicht ausgewertet werden, da die Prüfkörper wegen fehlender Aushärtung auseinanderfielen.

Legende:

    A 1 Linearer Polypropylenglykolether MG 1000; OH-Zahl 112; Funktionalität 2,0
    A 2 Linearer Polypropylenglykolether MG 2000; OH-Zahl 56; Funktionalität 2,0
    A 3 Auf Trimethylolpropan gestarteter Polypropylenglykolether MG 450; OH-Zahl 375; Funktionalität 3,0
    A 5 Linearer Polypropylenglykolether MG 220; OH-Zahl 515; Funktionalität 2,0
    A 6 Linearer Polyetherester aus 1 Mol Polyether A, 2 Mol Adipinsäure und 2 Mol Hexandiol-1,6
    C 1 Pentaerythrit
    C 2 Tris-(2-hydroxyethyl)isocyanurat
    C 3 Mannit
    C 4 Mischung von C1 und C3 im Verhältnis 1:1
    D 1 Zinkstearat
    D 2 Zinkoctoat (Fp. <100 °C)
    D 3 Wismuthstearat
    D 4 Bleistearat
    D 5 Cadmiumstearat

Tabelle 1

| Beispiel | A | Polyol | OH-Zahl | Funktionalität | Prepolymer P % NCO | Hydroxylverb. C | OH/NCO | Katalysat. D Gew.-% |
|---|---|---|---|---|---|---|---|---|
| 1 | 1 | Mol A 1 | 125 | 2,28 | 11,2 | C 1 | 1,8 | 0,1 D 1 |
|  | 0,33 | Mol A 2 |  |  |  |  |  |  |
|  | 0,53 | Mol A 3 |  |  |  |  |  |  |
| 1 a | " |  | " | " | " | " | " | / |
| 2 | " |  | " | " | " | " | 3,0 | 0,1 D 1 |
| 2 a | " |  | " | " | " | " | " | / |
| 2 b | " |  | " | " | " | " | " | 0,1 D 2 |
| 3 | " |  | " | " | " | " | 4,2 | 0,1 D 1 |
| 3 a | " |  | " | " | " | " | " | / |
| 4 | " |  | " | " | " | C 2 | 1,8 | 0,1 D 1 |
| 5 | " |  | " | " | " | C 3 | 3,0 | 0,1 D 1 |
| 6 | " |  | " | " | " | C 4 | 3,0 | 0,1 D 1 |
| 7 | " |  | " | " | " | C 1 | 3,0 | 0,1 D 3 |
| 8 | " |  | " | " | " | " | 3,0 | 0,1 D 4 |
| 9 | " |  | " | " | " | " | 3,0 | 0,1 D 5 |
| 10 | 1 | Mol A 2 | 160 | 2,15 | 9,5 | " | 3,0 | 0,1 D 1 |
|  | 2 | Mol A 5 |  |  |  |  |  |  |
|  | 0,57 | Mol A 3 |  |  |  |  |  |  |
| 11 | 1 | Mol A 6 | 110 | 2,30 | 10,5 | " | 3,0 | 0,1 D 1 |
|  | 0,44 | Mol A 3 |  |  |  |  |  |  |

Als Isocyanat B zur Herstellung des Prepolymeren P wurde 4,4'-Diphenylmethandiisocyanat mit 2 Gew.-% 2,4'-Diphenylmethandiisocyanat verwendet.

Tabelle 2

| Ergebnisse: | | | | | |
|---|---|---|---|---|---|
| Beispiel | Stabilität | Zugscherfestigkeit (MPa) nach einer Erwärmung von | | | |
| | | 15 Min. 140 °C | | 15 Min. 110 °C | |
| | | nach 1 bzw. | 24 Stunden | nach 1 bzw. | 24 Stunden |
| 1 | stab. | 16,2 | 16,0 | 5,3 | 11,4 |
| 1a* | stab. | 15,0 | 15,0 | keine Haftung | |
| 2 | stab. | 14,3 | 17,0 | 7,8 | 9,4 |
| 2a* | stab. | 15,0 | 15,5 | keine Haftung | |
| 2b* | instabil | | | | |
| 3 | stab. | 21,0 | 17,0 | 8,5 | 14,8 |
| 3a* | stab. | 15,0 | 16,0 | keine Haftung | |
| 4 | stab. | 14,0 | 16,0 | 6,3 | 12,2 |
| 5 | stab. | 18,0 | 20,0 | 8,1 | 14,6 |
| 6 | stab. | 20,0 | 24,0 | 10,3 | 15,7 |
| 7 | stab. | 17,3 | 19,5 | 4,8 | 12,2 |
| 8 | stab. | 15,0 | 17,0 | 6,3 | 14,0 |
| 9 | stab. | 12,0 | 13,5 | 4,2 | 14,9 |
| 10 | stab. | 6,8 | 7,5 | 3,0 | 6,0 |
| 11 | stab. | 18,5 | 20,0 | 9,3 | 15,8 |
| *) Vergleichsversuche | | | | | |

## Ansprüche

1. Hitzehärtbares Klebstoffsystem auf Basis von Isocyanatgruppen und Polyethersegmente enthaltenden Prepolymeren P und Polyhydroxylverbindungen C, dadurch gekennzeichnet, daß

1. das Prepolymere P auf Basis von einem oder mehreren Polyolen A mit Polyethersegmenten der mittleren Hydroxylzahl 50 bis 160 und einer mittleren Funktionalität von 2,05 bis 2,6 und wenigstens einem Diphenylmethandiisocyanat B aufgebaut ist, und

2. die Polyhydroxylverbindung C mindestens drei Hydroxylgruppen pro Molekül enthält, in einer Menge von 1 bis 10 Hydroxylgruppen pro noch verfügbarer NCO-Gruppe im Prepolymer P dispergiert ist und oberhalb von 110 °C schmilzt, und

3. als Katalysator D wenigstens ein oberhalb von 100 °C schmelzendes Carbonsäuresalz mit mehr als 12 C-Atomen von Wismuth, Cadmium, Blei oder Zink in fester Form enthalten ist.

2. Klebstoffsystem nach Anspruch 1, dadurch gekennzeichnet, daß als Komponente A Polyetherpolyole der mittleren Hydroxylzahl 90 bis 140 mit einer mittleren Funktionalität von 2,1 bis 2,4 eingesetzt werden.

3. Klebstoffsystem nach wenigstens einem der vorhergehenden Ansprüche, dadurch gekennzeichnet, daß als Komponente A Polyole eingesetzt werden, die sich von bi- oder trifunktionellen Startern durch Addition von Propylen- und/oder Ethylenoxid ableiten.

4. Klebstoffsystem nach wenigstens einem der vorhergehenden Ansprüche, dadurch gekennzeichnet, daß das Diphenylmethandiisocyanat B 4,4′-Diphenylmethandiisocyanat mit 0 bis 60 % bezogen auf die Gesamtmenge B 2,4′-Diphenylmethandiisocyanat ist.

5. Klebstoffsystem nach wenigstens einem der vorhergehenden Ansprüche, dadurch gekennzeichnet, daß die Polyhydroxylverbindung C Pentaerythrit ist.

6. Klebstoffsystem nach wenigstens einem der vorhergehenden Ansprüche, dadurch gekennzeichnet, daß der Katalysator D im wesentlichen in fester, feinverteilter Form vorliegt.

7. Klebstoffsystem nach wenigstens einem der vorhergehenden Ansprüche, dadurch gekennzeichnet, daß der Katalysator D Zinkstearat in einer Menge von 0,02 bis 0,5 Gew.-% bezogen auf das Gesamtsystem ist.

8. Klebstoffsystem nach wenigstens einem der vorhergehenden Ansprüche, dadurch gekennzeichnet, daß es als Eintopfsystem vorliegt.

9. Verfahren zum Verkleben von Werkstoffen mit einem hitzehärtbaren Klebstoffsystem, dadurch gekennzeichnet, daß als Klebstoffsystem eines gemäß wenigstens einem der vorhergehenden Ansprüche verwendet wird.